Europäisches Patentamt

European Patent Office

Office européen des brevets

(19)

(11) Numéro de publication: **0 046 420**
**B1**

(12) # FASCICULE DE BREVET EUROPEEN

(45) Date de publication du fascicule du brevet:
14.11.84

(51) Int. Cl.³: **H 04 B 7/185**

(21) Numéro de dépôt: **81401205.0**

(22) Date de dépôt: **28.07.81**

(54) Procédé d'établissement de conversations radiotéléphoniques DAMA simple bond par l'intermédiaire d'un satellite.

(30) Priorité: **06.08.80 FR 8017355**

(43) Date de publication de la demande:
**24.02.82 Bulletin 82/8**

(45) Mention de la délivrance du brevet:
**14.11.84 Bulletin 84/46**

(84) Etats contractants désignés:
**BE DE GB IT**

(73) Titulaire: **LMT RADIO PROFESSIONNELLE, 46-47, Quai Alphonse Le Gallo, F-92103 Boulogne-Billancourt (FR)**

(72) Inventeur: **Chavey, Christian, THOMSON-CSF-SCPI 173 Bld. Haussmann, F-75360 Paris Cedex 08 (FR)**
Inventeur: **Lagoutte, Pierre, THOMSON-CSF-SCPI 173 Bld. Haussmann, F-75360 Paris Cedex 08 (FR)**

(74) Mandataire: **Chaverneff, Vladimir et al, THOMSON-CSF SCPI 173, Bld Haussmann, F-75379 Paris Cedex 08 (FR)**

(56) Documents cités:
FR - A - 2 268 407
US - A - 3 548 108
US - A - 3 564 147

1976 INTERNATIONAL CONFERENCE ON COMMUNICATIONS, Philadelphia, 14-16 juin 1976 New York, US T. SATOH et al.: "Maritime satellite communications equipment of KDD-experimental system (MARSK-X)" pages 35-7 à 35-12
INTERNATIONAL CONFERENCE ON COMMUNICATIONS 1971, 14-16 juin 1971, Montreal New York, US L.B. DUNN: "Telephony to remote communities in Canada via satellite (Using single channel Per. R.F. Carrier), pages 11-20 à 1125
NATIONAL TELECOMMUNICATIONS CONFERENCE, 1-3 décembre 1975, New Orleans, New York, US

(56) Documents cités: (suite)
ALDRICH: "An operational single-channel-per-carrier, demand-assigned-multiple-access satellite telephone network using centralized control", pages 25-13 à 2516 ICC'79 CONFERENCE RECORD, vol. 1, INTERNATIONAL CONFERENCE ON COMMUNICATIONS, 10-14 juin 1979 Boston, New York, US SHIMAYAMA et al.: "FM SCPC system for various domestic satellite communications earth station", pages 16.3.1 à 1638
INTERNATIONAL CONFERENCE ON MARITIME AND AERONAUTICAL SATELLITE COMMUNICATION AND NAVIGATION, 7-9 mars 1978 Londres, GB R.F. HOSKYNS: "Multiplexing, multiple access and signalling in the MAROTS maritime mobile satellite system", pages 52-56

EP 0 046 420 B1

# Description

La présente invention se rapporte à un procédé d'établissement de conversations radiotéléphoniques DAMA (abréviation anglaise signifiant: Demand Assigned Multiple Acces c'est-à-dire accès multiple à affectation sur demande) simple bond par l'intermédiaire d'un satellite entre abonnés de stations périphériques faisant partie d'un réseau comportant, au sol, une station centrale et plusieurs stations périphériques, ainsi qu'à un dispositif de mise en œuvre de ce procédé.

Dans un réseau radiotéléphonique de communications par satellite, il se peut que deux ou plusieurs stations périphériques demandent simultanément, sur le même canal, à la station centrale, par l'intermédiaire du satellite, l'établissement d'une communication radiotéléphonique avec d'autres stations périphériques, ce qui risque de produire un conflit au niveau de la réception à la station centrale qui ne pourrait prendre correctement en compte ces demandes simultanées.

Pour éviter de tels inconvénients, on procède habituellement à ce qu'on appelle un «pooling» des stations périphériques. Cette méthode consiste à faire interroger cycliquement par la station centrale toutes le stations périphériques en envoyant, pour chaque station, dans le sens aller d'une voie bidirectionnelle de communication, l'identité de cette station. Les stations périphériques ayant une demande de communication à formuler renvoient cette même identité dans le sens retour de ladite voie bidirectionnelle. Cette solution élimine tous les conflits entre les demandes mais devient pénalisante lorsque le nombre de stations périphériques augmente et que le trafic par station diminue, car elle nécessite alors un nombre croissant de voies de demande, ce nombre étant proportionnel au nombre de stations et non au trafic par station.

D'après l'article de Shimaya et al paru aux pages 16.3.1 à 16.3.8 de ICC'79 Conference Record de Juin 1979, on connaît un système de communication par satellite dans lequel le canal de signalisation est commun et la trame de signalisation comporte un intervalle de temps réservé à la synchronisation (Reference) et 15 ou 31 autres intervalles de temps réservés à la signalisation pour 15 ou 31 stations périphériques. Ainsi, chaque station périphérique ne peut envoyer qu'une seule signalisation d'appel à la fois quel que soit le nombre d'abonnés demandant une communication pendant tout le temps mis à établir la première communication demandée. La longueur de la trame de signalisation est fixe quel que soit le nombre de stations émettant des appels ou en recevant, et la composition de cette trame ne peut être modifiée si par exemple beaucoup d'abonnés raccordés à une même station émettent des appels, alors que toutes les autres stations sont au repos. Si l'on modifiait, à la construction du réseau, la composition de la trame de signalisation pour admettre un plus grand nombre de stations et/ou pour faire passer simultanément plusieurs signalisations différentes pour chaque station, on ne pourrait pas réduire cette trame en cours de fonctionnement du réseau, en fonction du trafic, et ainsi, si dans ce cas d'une trame allongée, une seule station avait un trafic très important, les voies de signalisation inutilisées ne pourraient pas être transformées en voies de trafic pour la station active.

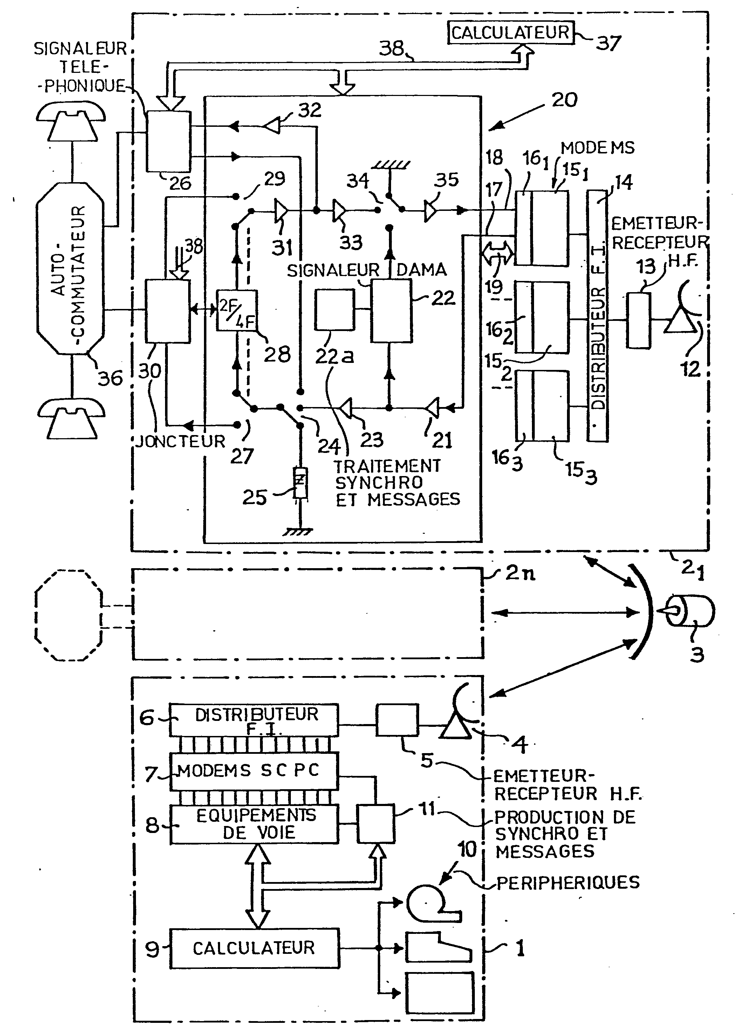

Le réseau décrit dans FR-A - 2 268 407 présente les mêmes inconvénients: chaque station périphérique utilise un premier canal de signalisation en direction de la station centrale (pointille sur la figure 1) et un second canal pour les appels provenant de la station centrale (trait mixte sur la figure 1). La largeur de chacun de ces canaux est fixe, et il n'est pas envisagé de la modifier en cours de fonctionnement, en fonction du trafic.

La présente invention a pour objet un procédé d'établissement de conversations radiotéléphoniques dans un réseau du type précité, ce procédé évitant le mieux et le plus rapidement possible les conflits dûs à des demandes simultanées, tout en nécessitant le moins possible de voies de communication.

La présente invention a également pour objet un dispositif de mise en œuvre de ce procédé.

Le procédé conforme à la présente invention consiste à faire émettre par la station centrale, au moins pendant les laps de temps pendant lesquels les stations périphériques sont susceptibles d'appeler la station central, sur une voie spécialisée unidirectionnelle commune à l'ensemble du réseau, dénommée par la suite «voie de synchronisation des évènements de présentation» ou V.S.E.P., un signal de synchronisation, et à faire émettre par les stations périphériques, sur des voies de signalisation distinctes de la V.S.E.P., chacune de leurs demandes d'établissement et/ou de rupture de communication, se présentant aléatoirement, en synchronisme avec un instant caractéristique déterminé de ce signal de synchronisation, cet instant caractéristique déterminé étant celui se présentant immédiatement après l'instant d'apparition de la demande correspondante, ou l'un des instants caractéristiques suivants lorsque plusieurs demandes se présentent entre deux instants caractéristiques consécutifs.

Selon un aspect du procédé de la présente invention, la station centrale attribue aux demandes d'établissement de communications émanant des stations périphériques un groupe de voies unidirectionnelles spécialisées dénommées «voies d'évènements de présentation» ou V.E.P., la taille de ce groupe étant variable, au cours du temps, en fonction de la densité du trafic du réseau, et la station centrale attribue à ses ordres, émis vers les stations périphériques, un autre groupe de voies unidirectionnelles spécialisées, dénommées «voies de distribution d'ordres» ou V.D.O., la taille de cet autre groupe étant également variable, au cours du temps, en fonction de la densité du trafic du réseau.

Selon un autre aspect du procédé de la présente invention, l'enveloppe du signal de synchronisation est un signal rectangulaire dont la période est légèrement supérieure á la durée maximale des demandes émises par les stations périphériques sur leurs V.E.P., et les fronts, par exemple les fronts montants, de ce signal rectangulaire, sont les dits instants caractéristiques. Selon une autre caractéristique de l'invention, au moins une partie de ce signal de synchronisation renferme des messages à destination des stations périphériques.

De façon avantageuse, les groupes de V.E.P. et de V.D.O. sont adjacents à la V.S.E.P., de part et d'autre de celle-ci.

Selon un autre aspect du procédé de la présente invention, lors de la mise en route d'une station périphérique, cette station périphérique procède à un balayage des bandes de fréquences attribuées au réseau, localise la V.S.E.P., et se cale sur sa fréquence pour déterminer ses propres V.E.P. et V.D.O. en fonction des indications fournis par la station centrale et en fonction de son identité dans le réseau.

Le dispositif de mise en œuvre de la présente invention est du type permettant l'établissement de conversations radiotéléphoniques DAMA simple bond, par l'intermédiaire d'un satellite, entre abonnés de stations périphériques faisant partie d'un réseau comportant, au sol, une station centrale et plusieurs stations périphériques, la station centrale comportant essentiellement une antenne, un circuit émetteur-récepteur haute fréquence, un circuit distributeur de fréquences intermédiaires, un ensemble de modulateurs-démodulateurs de fréquences intermédiaires du type SCPC, un ensemble d'équipements de voie, un calculateur et des organes périphériques, et selon l'invention, comporte, dans la station centrale de type connu en soi, un moyen de production de signal de synchronisation et un moyen d'insertion de messages dans le signal de synchronisation, et ce dispositif comporte, dans chaque station périphérique, entre les équipements de voies SCPC, c'est-à-dire du type à un seul canal par fréquence porteuse, formant les éléments terminaux des équipements radio et le joncteur téléphonique et le signaleur de leur autocommutateur, un circuit DAMA de commande et d'interfaçage de la voie SCPC correspondante.

Selon un caractéristique du dispositif de l'invention, le circuit DAMA de commande et d'interfaçage comporte des moyens d'isolement DAMA/téléphonie, un circuit de signalisation DAMA, un circuit de commande automatique de gain en téléphonie, des moyens de pilotage de la voie SCPC correspondante, et, le cas échéant un dispositif de passage 2 fils/4 fils côté téléphonique.

La présente invention sera mieux comprise à l'aide de la description détaillée d'un mode de réalisation pris comme exemple non limitatif et illustré par le dessin annexé dont la figure unique est un bloc diagramme d'un réseau radiotéléphonique par satellite conforme à la présente invention.

Le réseau radiotéléphonique de communications par satellite représenté schématiquement sur la figure unique du dessin, du type DAMA, comporte essentiellement une station centrale 1, n stations périphériques, $2_1$ à 2 n et un satellite de télécommunications 3, du type géostationnaire.

La station centrale 1 comporte essentiellement, de façon classique, une antenne 4, un circuit émetteur-récepteur haute fréquence 5, un circuit 6 distributeur de fréquences intermédiaires, un ensemble 7 de modulateurs/démodulateurs de fréquences intermédiaires du type SCPC (Single Channel per Carrier, c'est-à-dire du type à un seul canal par fréquence porteuse), un ensemble 8 d'équipements de voie, un calculateur (ou ensemble de calculateurs dupliqués) 9, et des organes périphériques 10 associés au calculateur 9, par exemple des claviers d'introduction de données commandés par l'opérateur de la station centrale, des consoles de visualisation, des mémoires de masse, etc.

Selon la présente invention, on relie, dans la station centrale 1, à l'ensemble 7 et à l'ensemble 8, un dispositif 11 de production de signaux de synchronisation et d'insertion de messages dans ces signaux de synchronisation, également commandé par le calculateur 9. Il est bien entendu que pour des raisons de facilité de réalisation, le dispositif 11 peut être intégré à l'ensemble 8.

Le satellite 3 de télécommunications est un satellite classique à transpondeurs et ne sera donc pas décrit en détail.

Les n stations périphériques $2_1$ à 2 n du réseau sont de construction similaire, seul le nombre de leurs abonnés, donc la capacité de leur autocommutateur, pouvant varier, on ne décrira donc en détail qu'une seule de ces stations périphériques, par exemple la station $2_1$.

Toutefois, au cas où une station périphérique est proche physiquement de la station centrale, l'ensemble d'emission/réception et l'antenne peuvent leur être communs.

La station périphérique $2_1$ comprend: une antenne 12 suivie d'un circuit émetteur-récepteur haute fréquence 13, et d'un distributeur de fréquences intermédiaires 14 qui est relié à plusieurs, par exemple trois, modulateurs/démodulateurs de fréquences intermédiaires du type SCPC référencés $15_1$, $15_2$ et $15_3$.

Chacun des modulateurs/démodulateurs $15_1$ à $15_3$ comporte, en sortie, une interface, respectivement référencée $16_1$ à $16_3$, réalisant l'interfaçage avec les circuits DAMA (Demand Assignment Multiple Access) reliés en aval.

Pour la clarté du dessin, on n'a représenté qu'un seul des circuits reliés en aval des modulateurs/démodulateurs, à savoir le circuit faisant suite au modulateur/démodulateur $15_1$, tous ces circuits étant identiques.

L'interface $16_1$ est reliée par deux liaisons basse fréquence bifilaires unidirectionnelles 17 et 18 et par une liaison de commande unidirectionnelle symbolisée par une flèche double 19 à un circuit 20 de commande et d'interface de la voie SCPC correspondante ($15_1$ dans le cas présent).

La liaison de réception 17 relie la sortie basse fréquence de l'interface 16, à l'entrée d'un amplificateur 21 à sortie asymétrique.

La sortie de l'amplificateur 21 est reliée d'une part à l'entrée de réception d'un signaleur 22 approprié pour le système DAMA, et d'autre part à l'entrée d'un autre amplificateur 23 à sorties symétriques, de préférence à gain réglable. Le signaleur 22 est relié à un circuit 22a de traitement des signaux de synchronisation et des messages émis par la station centrale. Pour la simplification de la réalisation, le circuit 22a peut être intégré au signaleur 22. Les sorties de l'amplificateur 23 sont reliées à l'une des paires de contacts fixes d'un commutateur double 24 à trois positions. Pour simplifier le dessin, toutes les liaisons symétriques bifilaires ont été représentées par un seul trait et le commutateur double 24 a été représenté comme un commutateur simple, et l'homme de l'art pourra facilement compléter le dessin.

Une seconde paire de contacts fixes du cummutateur 24 est reliée à la masse à chaque fois par une impédance 25 dont la valeur est égale à celle des lignes de transmission basse fréquence utilisées. Dans un exemple de réalisation, cette impédance est une résistance pure de 600 ohms. La troisième paire de contacts fixes du commutateur 24 est reliée à la sortie d'un signaleur téléphonique 26. La paire de contacts mobiles du commutateur 24 est reliée à la paire de contacts mobiles d'un autre commutateur double 27 à deux positions qui a également été représenté sous forme d'un commutateur simple et dont une première paire de contacts fixes est reliée à l'entrée, côté 4 fils, d'un circuit équilibreur 2 fils/4 fils 28. La sortie, côté 4 fils du circuit équilibreur 28 est reliée à une première paire de contacts fixes d'un commutateur double 29 également représenté sous forme d'un commutateur simple. Le côté 2 fils de l'équilibreur 28 est relié à un joncteur de ligne téléphonique 30. Les deuxièmes paires de contacts fixes des commutateurs 27 et 29 sont respectivement reliées à une entrée et à une sortie du joncteur 30. Toutefois, si l'on veut simplifier le joncteur de ligne, il est possible de ne prévoir qu'un seul type de raccordement, soit en quatre fils, soit en deux fils, ce qui permet de supprimer les commutateurs 27 et 29, et de supprimer le circuit équilibreur 28 dans le cas du raccordement à quatre fils.

Le contact mobile du commutateur 29 est relié à l'entrée d'un amplificateur 31 dont la sortie asymétrique est reliée d'une part à l'entrée d'un amplificateur 32 à sorties symétriques et d'autre part à l'entrée d'un amplificateur 33 à sortie asymétrique et ayant une commande automatique de gain. Les sorties de l'amplificateur 32 sont reliées, par une liaison symétrique à 2 fils au signaleur téléphonique 26. La sortie de l'amplificateur 33 est reliée à l'un des contacts fixes d'un commutateur 34 à trois positions. Un second contact fixe du commutateur 34 est relié à la sortie du signaleur 22, et le troisième contact fixe du commutateur 34 est relié à la masse. Le contact mobile du commutateur 34 est relié à l'entrée d'un amplificateur 35 à sorties symétriques. Les sorties symétriques de l'amplificateur 35 sont reliées, par la liaison bifilaire 18 à l'interface 16₁.

Le joncteur de ligne 30 et le signaleur 26 sont reliés à un autocommutateur 36.

La station 21 comporte également une intelligence décentralisée 37 formée d'un ou de plusieurs microprocesseurs. L'intelligence 37 est reliée par des liaisons de gestion informatique, symbolisées par une flèche large 38, aux circuits 20, 26 et 30.

On va maintenant expliquer le fonctionnement du réseau décrit ci-dessus.

A chaque changement notable du trafic du réseau, aussi bien lors d'une grande augmentation ou diminution du nombre d'appels que lors de la mise en route du réseau téléphonique, ou lors de sa reconfiguration (par suite de l'adjonction de nouvelles stations périphériques ou d'une nouvelle attribution de fréquences dans la bande de fréquence du satellite), on fait émettre par la station centrale 1 un message de configuration des voies de signalisation sur une voie appelée «voie de synchronisation d'évènements de présentation» ou V.S.E.P.

Cette V.S.E.P. est prise de préférence approximativement au milieu de l'une (ou de la) des bandes de fréquences attribuées au réseau en question, ce de façon à pouvoir lui accoler d'un côté et de l'autre les voies de signalisation V.E.P. et V.D.O. décrites ci-dessous.

La station centrale émet en permanence (ou au moins pendant les laps de temps pendant lesquels sont susceptibles de se produire des appels téléphoniques des stations périphériques) un signal de synchronisation se présentant sous forme d'un signal rectangulaire dont les fronts actifs sont par exemple les fronts montants. La période de ce signal peut par exemple être de 250 ms environ.

A l'intérieur de l'une ou de plusieurs impulsions de ce signal rectangulaire, on insère différents messages se présentant sous forme de signaux codés dont la fréquence est bien entendu supérieure à celle dudit signal rectangulaire. Ces signaux peuvent par exemple être des monofréquences acoustiques choisies parmi un ensemble de quinze fréquences comprises dans la bande 300–3300 Hz, chaque fréquence étant émise pendant quelques dizaines de millisecondes. Ce codage assure la meilleure immunité au bruit en transmission radio à taux de modulation constant. Le signal rectangulaire et les messages sont produits, de façon connue en soi, par le circuit 11, sous le contrôle du calculateur 9.

Le message de configuration des voies de signalisation informe les stations périphériques sur le nombre instantané de V.E.P. et de V.D.O. attribuées, par la station centrale aux stations périphériques, en fonction de la densité du trafic du réseau. Lors de la mise en route d'une station périphérique, cette station explore la bande de fréquences du transpondeur correspondant du satellite à la recherche de la V.S.E.P., ce qui se fait relativement rapidement (en général quelques minutes). Dès que cette station périphérique a localisé la V.S.E.P., elle se cale sur sa fréquence pour déterminer les V.D.O. et les V.E.P. de ses équipements de la façon décrite ci-dessous.

A chaque voie SCPC d'une station périphérique est associée une identité ou numéro de cette voie. Cette identité, câblée dans le circuit SCPC correspondant ($15_1$ à $15_3$ sur l'exemple du dessin), est connue de l'intelligence décentralisée (37) de la station périphérique.

L'intelligence décentralisée, après réception (par le signaleur 22) et décodage (par le circuit 22a) du message de configuration de voies de signalisation, détermine, par une transformation simple, le numéro d'identité de la V.E.P. et de la V.D.O. associées à chaque voie SCPC. Si par exemple la station centrale attribue n voies V.E.P. et m voies V.D.O. au réseau, le numéro de V.E.P. et de V.D.O. associé à une voie SCPC peut être la «checksum» de l'identité modulo n et modulo m respectivement. Ainsi, chaque station périphérique connait le numéro de la V.E.P. et de la V.D.O. associées à chacune de ses voies SCPC. Les V.E.P. (voies d'évènements de présentation) sont des voies de signalisation destinées uniquement à transmettre les demandes d'établissement de communications et de ruptures de communications des stations périphériques, et les V.D.O. (voies de distribution d'ordres) sont des voies de signalisation destinées uniquement à transmettre les appels et les ordres de choix de voies de trafic émis par la station centrale. Les V.E.P. et les V.D.O. sont situées de part et d'autre de la V.S.E.P. Au repos, c'est-à-dire en l'absence d'appels de ses abonnés, une station reste en écoute sur sa V.D.O.

Lorsque l'un des abonnés reliés à l'autocommutateur d'une station périphérique forme sur son poste téléphonique le numéro d'appel d'un abonné relié à l'autocommutateur d'une autre station périphérique, cet appel n'est émis par sa station périphérique que lorsque se présente le prochain front actif du signal de synchronisation reçu par cette station. Etant donné que les signaux émis par les différentes stations périphériques mettent pratiquement le même temps pour parvenir au satellite, les appels d'abonnés reliés à des stations périphériques différentes, et survenant entre deux fronts actifs consécutifs du signal de synchronisation, parviennent obligatoirement simultanément à la station centrale qui peut facilement détecter cette simultanéité et les refuser sans risque de double prise en trafic (passage simultané de deux voies SCPC sur le même canal de trafic). Les stations périphériques recommencent alors leur appels suivant la procédure DAMA connue jusqu'à ce que les différents appels se présentent en des instants séparés par au moins un front actif du signal de synchronisation, et soient donc émis par les stations périphériques respectives en concordance avec des fronts actifs différents. Du fait que la période du signal de synchronisation est supérieure à la durée d'un appel, la station centrale peut alors facilement prendre en compte ces appels et leur donner suite. Ainsi, il n'y a aucun risque de chevauchement partiel des appels provenant de stations périphériques différentes, chevauchement partiel qui risquerait d'être mal interprété par la station centrale et de donner lieu à des mises en communications erronées. Par contre, des cas d'appels se chevauchant entièrement sont correctement interprétés par la station centrale qui les refuse purement et simplement.

Dès qu'un appel est pris en compte par la station centrale, celle-ci en informe la station périphérique du demandeur sur la V.D.O. associée à la voie SCPC de réception utilisée, pour la faire patienter, et lui indique le numéro de la voie de trafic, à savoir la voie $VT_1$ sur laquelle ces deux stations vont basculer aussitôt pour la poursuite de la mise en communication.

Ensuite, la station centrale envoie un appel sur la V.D.O. associée à la voie SCPC de réception correspondant à l'abonné demandé de la station périphérique destinatrice, et en même temps la station centrale indique à cette station périphérique destinatrice le numéro de la voie de trafic, à savoir la voie $VT_2$ différente de $VT_1$, sur laquelle ces deux stations vont basculer aussitôt. On notera que les voies $VT_1$ et $VT_2$ comprennent chacune deux chemins de transmission différents, de et vers la station centrale, occupant chacun une fréquence de la bande de fréquences allouées du transpondeur du satellite. Ainsi, la station centrale dialogue individuellement avec les deux stations périphériques en question, sur deux voies bidirectionnellement différentes. La liaison entre la station centrale et la station périphérique destinatrice se poursuit sur $VT_2$ jusqu'au décrochage de l'abonné demandé. Dès que se produit ce décrochage, la station centrale donne l'ordre à la station périphérique destinatrice, sur la même V.D.O., de basculer sur $VT_1$. Aussitôt après ce basculement, les deux stations périphériques sont en communication sur $VT_1$, sans passer par la station centrale (liaison simple bond), et l'abonné demandeur peut converser avec l'abonné demandé.

Dès que l'un des deux abonnés raccroche, sa station détecte cet évènement et émet un signal correspondant de fin de communication en coïncidence avec un flanc actif du signal de synchronisation, sur la V.E.P. associée à la voie SCPC utilisée.

En outre, ladite station ayant détecté le raccrochement émet sur $VT_1$ un message de libération de cette voie de trafic vers l'autre station, et ces deux stations relâchent, chacune de son côté, la voie $VT_1$.

Bien entendu, la station centrale peut, à tout moment, envoyer sur $VT_1$ des messages de libération autoritaire si cette voie est réputée bloquée.

En outre, la station centrale peut émettre sur $VT_1$ des messages de changement de voie de trafic pendant la phase de conversation des stations périphériques. Ainsi, il est possible de regrouper les voies de conversation utilisées à l'une des extrémités de la bande de fréquences du transpondeur (en heures creuses par exemple) sur l'ordre de l'opérateur de la station centrale pour permettre la transmission de signaux à large bande, par exemple de signaux vidéo, sur les autres voies de cette bande de fréquences.

Dans la station centrale, les différents équipements de voie de l'ensemble 8 d'équipements de voie sont banalisés, c'est-à-dire n'ont pas de fonction spécifique, et sont débanalisés au fur et à mesure des besoins sous la commande du calculateur 9. Ainsi, les équipements de voie peuvent être affectés soit aux V.D.O., soit aux V.E.P., soit aux voies de trafic. Il faut remarquer que le nombre d'équipements de voie associés aux voies de trafic n'est pas égal au nombre total des voies de trafic du réseau, mais au nombre de communications en cours d'établissement, ajouté au nombre de voies en télésurveillance, ce dernier nombre pouvant être nul si la télésurveillance ne s'exerce qu'en heures creuses.

## Revendications

1. Procédé d'établissement de conversations radiotéléphoniques DAMA, c'est-à-dire à accès multiple à affectation sur demande, simple bond par l'intermédiaire d'un satellite (3) entre abonnés (36) de stations périphériques faisant partie d'un réseau comportant, au sol, une station centrale (1) et plusieurs stations périphériques ($2_1$ à $2_n$), caractérisé par le fait que l'on fait émettre par la station centrale, au moins pendant les laps de temps pendant lesquels les stations périphériques sont susceptibles d'appeler la station centrale, sur une voie spécialisée unidirectionnelle commune à l'ensemble du réseau dénommée «voie de synchronisation d'évènements de présentation» ou V.S.E.P., un signal de synchronisation, et que l'on fait émettre par les stations périphériques, sur des voies de signalisation distinctes de la V.S.E.P., chacune de leurs demandes d'établissement et/ou de rupture de communication, se présentant aléatoirement, en synchronisme avec un instant caractéristique déterminé de signal de synchronisation, cet instant caractéristique déterminé étant celui se présentant immédiatement après l'instant d'apparition de la demande correspondante, ou l'un des instants caractéristiques suivants lorsque plusieurs demandes se présentent entre deux instants caractéristiques consécutifs.

2. Procédé selon la revendication 1, caractérisé par le fait que l'enveloppe du signal de synchronisation est un signal rectangulaire dont la période est légèrement supérieure à la durée maximale des demandes émises par les stations périphériques, et que l'instant caractéristique est un front de ce signal rectangulaire.

3. Procédé selon la revendication 2, caractérisé par le fait qu'au moins une partie du signal de synchronisation renferme des messages à destination des stations périphériques.

4. Procédé selon l'une quelconque des revendications 1 à 3, caractérisé par le fait que la station centrale attribue aux demandes d'établissement de communications émanant des stations périphériques un groupe de voies unidirectionnelles spécialisées, dénommées «voies d'évènements de présentation» ou V.E.P., la taille de ce groupe étant variable au cours du temps, en fonction de la densité du trafic du réseau, et par le fait que la station centrale attribue à ses ordres, émis vers les stations périphériques, un autre groupe de voies unidirectionnelles spécialisées, dénommées «voies de distribution d'ordres» ou V.D.O., la taille de cet autre groupe étant également variable, au cours du temps, en fonction de la densité du trafic du réseau.

5. Procédé selon la revendication 4, caractérisé par le fait que les groupes de V.E.P. et V.D.O. sont adjacents à la V.S.E.P., de part et d'autre de celle-ci.

6. Procédé selon l'une quelconque des revendications 4 ou 5, caractérisé par le fait que lors de la mise en route d'une station périphérique, cette station procède à un balayage des bandes de fréquences attribuées au réseau, localise la V.S.E.P., et se cale sur sa fréquence pour déterminer les V.D.O. et les V.E.P. de ses équipements en fonction des indications fournies par la station centrale et en fonction de son identité dans le réseau.

7. Dispositif de mise en œuvre du procédé selon l'une quelconque des revendications précédentes du type permettant l'établissement de conversations radiotéléphoniques DAMA simple bond, par l'intermédiaire d'un satellite (3), entre abonnés (36) de stations périphériques faisant partie d'un réseau comportant, au sol, une station centrale (1) et plusieurs stations périphériques ($2_1$ à $2_n$), la station centrale comportant essentiellement une antenne (4), un circuit émetteur-récepteur haute fréquence (5), un circuit distributeur de fréquences intermédiaires (6), un ensemble (7) de modulateurs-démodulateurs de fréquences intermédiaires du type SCPC c'est-à-dire du type à un seul canal par fréquence porteuse, un ensemble d'équipements de voie (8), un calculateur (9) et des organes périphériques (10), caractérisé par le fait qu'il comporte, dans la station centrale (1) de type connu en soi, un moyen de production de signal de synchronisation (11) et un moyen (8) d'insertion de messages dans le signal de synchronisation, et qu'il comporte, dans chaque station périphérique entre les équipements de voies SCPC formant les éléments terminaux des équipements radio ($15_1$ à $15_3$) et le joncteur téléphonique (30) et le signaleur (26) de leur autocommutateur (36), un circuit DAMA (20) de commande et d'interface de la voie SCPC correspondante.

8. Dispositif selon la revendication 7, caractérisé par le fait que le circuit DAMA de commande et d'interfaçage comporte des moyens d'isolement DAMA/téléphonie (20), un circuit de signalisation DAMA (22), un circuit de commande automatique de gain en téléphonie (33), des moyens (22a) de pilotage de la voie SCPC correspondante, et, le cas échéant, et dispositif de passage 2 fils/4 fils côté téléphonique (30).

## Patentansprüche

1. Verfahren zur Herstellung von Einfachsprung-DAMA-Radiotelefonverbindung (wobei DAMA «Mehrfachzugang mit Zuteilung auf Anforderung» bedeutet) mit Vermittlung durch einen Satelliten (3), zwischen Teilnehmern (36) von Peripheriestationen, die zu einem Netz gehören, das am Boden eine Zentralstation (1) und mehrere Peripheriestationen ($2_1$ bis $2_n$) umfasst, dadurch gekennzeichnet, dass wenigstens während der Zeitspannen, innerhalb welcher an die Zentralstation gerichtete Anrufe der Peripheriestationen zu gewärtigen sind, durch einen zu dem ganzen Netz gehörigen speziellen, «Zustellungssynchronosierkanal» oder VSEP genannten Einwegkanal ein Synchronisiersignal von der Zentralstation abgegeben wird, und dass von den Peripheriestationen durch von dem VSEP-Kanal verschiedenen Signalisierungskanälen jeder ihrer zu unbestimmten Zeitpunkten auftretenden Anträge auf Herstellung und/oder Unterbrechung einer Verbindung im Gleichtakt mit einem bestimmten charakteristischen Zeitpunkt dieses Synchronisierungssignals abgegeben wird, wobei dieser bestimmte charakteristische Zeitpunkt entweder derjenige Zeitpunkt ist, der unmittelbar auf den Zeitpunkt des Auftretens des betreffenden Antrags folgt, oder einer der folgenden charakteristischen Zeitpunkte ist, wenn mehrere Anträge zwischen zwei aufeinanderfolgenden charakteristischen Zeitpunkten auftreten.

2. Verfahren nach Anspruch 1, dadurch gekennzeichnet, dass die Hülle des Synchronisiersignals ein rechteckiges Signal ist, dessen Periode geringfügig länger ist, als die maximale Dauer der von den Peripheriestationen abgegebenen Anträge, und dass der charakteristische Zeitpunkt eine Stirnflanke dieses rechteckigen Signals ist.

3. Verfahren nach Anspruch 2, dadurch gekennzeichnet, dass wenigstens ein Teil des Synchronisiersignals Meldungen für die Peripheriestationen beinhaltet.

4. Verfahren nach einem der Ansprüche 1 bis 3, dadurch gekennzeichnet, dass die Zentralstation den von den Peripheriestationen ausgehenden Anträgen auf Herstellung von Verbindungen eine Gruppe spezialisierter «Zustellungsereigniskanäle» oder VEP genannte Einwegkanäle zuordnet, wobei der Umfang dieser Gruppe zeitlich in Abhängigkeit von der Verkehrsdichte des Netzes veränderlich ist, und dass die Zentralstation ihren an die Peripheriestationen gerichteten Befehlen eine andere Gruppe spezieller, «Befehlsverteilungskanäle» oder VDO genannte Einwegkanäle zuordnet, wobei der Umfang dieser anderen Gruppe ebenfalls zeitlich in Abhängigkeit von der Verkehrsdichte des Netzes veränderlich ist.

5. Verfahren nach Anspruch 4, dadurch gekennzeichnet, dass die VEP- und VDO-Gruppen beiderseits des VSEP-Kanals und in Nähe desselben angeordnet sind.

6. Verfahren nach einem der Ansprüche 4 oder 5, dadurch gekennzeichnet, dass bei Inbetriebsetzung einer Peripheriestation diese Station die dem Netz zugeordneten Frequenzbänder abtastet, den VSEP-Kanal ortet und sich auf seine Frequenz festlegt, um die VDO- und VEP-Gruppen seiner Baukomponenten nach Massgabe der von der Zentralstation gelieferten Angaben und nach Massgabe ihrer Identität innerhalb des Netzes zu bestimmen.

7. Vorrichtung zur Anwendung des Verfahrens nach einem der vorstehenden Ansprüche, die durch Vermittlung eines Satelliten (3) Einfachsprung-DAMA-Telefonverbindungen zwischen Teilnehmern (36) von Peripheriestationen herstellen kann, die zu einem Netz gehören, welches am Boden eine Zentralstation (1) und mehrere Peripheriestationen ($2_1$ bis $2_n$) aufweist, wobei die Zentralstation im wesentlichen eine Antenne (4), einen Hochfrequenz-Sende-und-Empfangskreis (5), einen Mittelfrequenzverteilerkreis (6), eine Baugruppe von Mittelfrequenzmodulatoren-Demodulatoren des Typs SCPC – d. h. des Typs mit einem einzigen Kanal pro Trägerfrequenz – sowie eine Kanalzubehörbaugruppe (8) und ferner eine Rechenvorrichtung (9) und Peripherieorgane (10) umfasst, dadurch gekennzeichnet, dass sie in der an sich bekannten Zentralstation (1) ein Synchronisiersignalerzeugungsmittel (11) und ein Eingabemittel (8) zum Eingeben von Meldungen in das Synchronisiersignal aufweist, und dass sie an jeder Peripheriestation zwischen den die Endelemente der Radiozubehörteile ($15_1$ bis $15_3$) bildenden SCPC-Kanalzubehörteilen und der Telefonanschlussvorrichtung (30) und der Signalisiervorrichtung (26) ihres selbsttätigen Umschalters (36) einen DAMA-Betätigungs- und -Zwischenstromkreis (20) des entsprechenden SCPC-Kanals besitzt.

8. Vorrichtung nach Anspruch 7, dadurch gekennzeichnet, dass der DAMA-Betätigungs- und -Zwischenstromkreis DAMA/Telefonierisolermittel (20), einen DAMA-Signalisierstromkreis (22), einen automatischen Kontrollstromkreis (33) des telefonischen Verstärkungsfaktors, Mittel (22a) zur Steuerung des entsprechenden SCPC-Stromkreises, sowie gegebenenfalls eine telefonseitig angeordnete 2-Leitungs-/4-Leitungs-Durchgangsvorrichtung (30) umfasst.

## Claims

1. A method of establishing radio-telephone conversations of the DAMA type, i. e. with Demand Assigned Multiple Access, simple jump, trough the intermediary of a satellite (3), between subscribers (36) of peripheral stations belonging to a network comprising, on the ground, a central station (1) and a plurality of peripheral stations ($2_1$ to $2_n$), characterized by the fact that is made to emit from the central station, at least during the lapse of time during which the peripheral stations are liable to call the central station, on a specialized unidirectional canal common to the entire network and called 'presentation event synchronization canal' or VSEP, a synchronization signal, and emitting from the peripheral stations, on signalling canals distinct from the VSEP, each one of their demands for establishing and/or breaking a communication, which occur randomly, in synchronism with a determined characteristic instant of said synchronisation signal, said determined characteristic instant being the instant following immediately the instant of appearance of the related demand or one of the following characteristic instants when a plurality of demands occur between two consecutive characteristic instants.

2. A method according to claim 1, characterized by the fact that the envelope of the synchronisation signal is a rectangular signal, the period of which is slightly larger than the maximum duration of the demands emitted by the peripherial stations, and that the characteristic instant is a front flanc of this rectangular signal.

3. A method according to claim 2, characterized in that at least a portion of the synchronisation signal includes messages addressed to the peripheral stations.

4. A method according to any one of claims 1 to 3, characterized by the fact that the central station assigns to the communication establishment demands issuing from the peripheral stations a group of specialized unidirectional canals, called 'presentation event canals' or VEP, the size of said group being variable in time as a function of the traffic density of the network, and by the fact that the central station assigns to its orders emitted toward the peripheral stations another group of specialized unidirectional canals, called 'order distributing canals' or VDO, the size of said other group being also variable during time as a function of the traffic density of the network.

5. A method according to claim 4, characterized by the fact that the VEP and VDO groups are located adjacent to the VSEP on either side thereof.

6. A method according to any one of claims 4 or 5, characterized by the fact that, when a peripheral station is started, said station effects a scanning of the frequency bands assigned to the network, locates the VSEP and stays fixed on its frequency so as to determine the VDO and VEP of its equipments as a function of the indications provided by the central station and as a function of its identity in the network.

7. A device for carrying out the method according to any one of the preceding claims, of the type which permits the establishment of simple-jump/DAMA radio-telephone conversations through the intermediary of a satellite (3) between subscribers (36) of peripheral stations belonging to a network comprising, on the ground, a central station (1) and a plurality of peripheral stations ($2_1$ to $2_n$); said central station comprising essentially an antenna (4), a high-frequency emitter-receiver circuit (5), a medium-frequency distributing circuit (6), a group of medium-frequency modulators-demodulators (7) of the SCPC type i.e. having a single canal per carrier frequency, a canals equipment group (8), a computer (9) and peripheral organs (10), characterized by the fact that is comprises in the central station (1) known per se means for producing a synchronization signal (11) and means (8) for inserting messages in the synchronization signal, and that is comprises in each peripheral station between the SCPC canal equipments constituting the terminal elements of the radio equipments ($15_1$ to $15_3$) and the telephone junction switch (30) and the signaller (26) of their autocommutator (36) a DAMA control and interface circuit (20) of the corresponding SCPC canal.

8. A device according to claim 7, characterized in that the DAMA control and interface circuit comprises DAMA/telephone isolating means (20), a DAMA signalization circuit (22), an automatic telephone gain control circuit (33), means (22a) for piloting the corresponding SCPC canal, and possibly a 2-wire/4-wire passage device (30) on the telephone side.

0 046 420

CALCULATEUR — 37
38

SIGNALEUR TELE-PHONIQUE
AUTO-COMMUTATEUR
38
JONCTEUR
36
30
27
26
29
2F/4F
28
32
31
33
34
35
SIGNALEUR DAMA
22
22a
25
24
23
21
TRAITEMENT SYNCHRO ET MESSAGES
20
18
17
19
MODEMS
$16_1$  $15_1$  14
$16_2$  $15_2$
$16_3$  $15_3$
DISTRIBUTEUR F.I.
EMETTEUR-RECEPTEUR H.F.
13
12

$2n$  $2_1$
3

6  DISTRIBUTEUR F.I.
7  MODEMS SCPC
8  EQUIPEMENTS DE VOIE
11
5
4
EMETTEUR-RECEPTEUR H.F.
PRODUCTION DE SYNCHRO ET MESSAGES
10
PERIPHERIQUES
9  CALCULATEUR
1